# EUROPÄISCHE PATENTSCHRIFT

(11) **EP 0 345 245 B1**
(45) Veröffentlichungstag und Bekanntmachung des Hinweises auf die Patenterteilung: **13.10.1993**
(21) Anmeldenummer: 89890141.8
(22) Anmeldetag: 12.05.1989
(51) Int. Cl.: F16K 15/08

(54) **Ringventil**
Ring valve
Soupape annulaire

(30) Priorität: 31.05.1988 AT 1424/88; 22.07.1988 AT 1874/88
(43) Veröffentlichungstag der Anmeldung: 06.12.1989
(73) Patentinhaber: HOERBIGER VENTILWERKE AKTIENGESELLSCHAFT, 1110 Wien (AT)
(72) Erfinder: Hrabal, Hans, A-1140 Wien (AT)
(74) Vertreter: Klein, Adam, Dipl.Ing.

(56) Entgegenhaltungen:
- DE-A- 2 446 977
- DE-C- 8 429
- DE-C- 89 947
- DE-C- 125 808
- DE-C- 139 664
- DE-C- 202 609
- DE-C- 511 264
- DE-C- 823 376
- US-A- 3 123 095
- US-A- 3 489 334
- US-A- 4 483 363

## Beschreibung

Die Erfindung bezieht sich auf ein Ringventil, insbesondere für Verdichter, nach dem oberbegriff des Anspruchs 1.

Ventile dieser Bauart sind heute in den verschiedensten Ausführungen bekannt und insbesondere bei Kompressoren bzw. Verdichtern zur selbsttätigen Steuerung des Ladungswechsels in Verwendung. Dabei muß die Ventilplatte zur zufriedenstellenden Erfüllung ihrer eigentlichen Dichtfunktion an ihrer dem Ventilsitz zugekehrten Oberfläche mit den Öffnungen der Durchgangskanäle sicher zusammenwirken. Außerdem muß aber auch eine möglichst gleichmäßige Aufteilung der meist über einzelne Federelemente ausgeübten Vorspannkraft angestrebt werden. Daraus ergeben sich oft Probleme bei der Konstruktion der Ventile insofern, als ein möglichst günstiger Kompromiß zwischen Steifheit zur Verbesserung der Aufteilung der Vorspannkraft und Weichheit bzw. Elastizität zur Verbesserung der eigentlichen Dichtwirkung nur relativ schwer zu realisieren ist.

Aus der DE-C 202 609 ist ein Ringventil der eingangs angeführten Bauart bekannt. Die Stützplatte ist dort über eine eigene Lenkerplatte mit flexiblen Lenkerarmen im Ventil - geführt und die mit konischem Querschnitt ausgeführten Ventilringe sind an den Ringen der Stützplatte mittels Schrauben befestigt. Diese Ausbildung ist zunächst verhältnismäßig aufwendig, weil eigene Befestigungsschrauben mit zugehörigen Bohrungen notwendig sind, die außerdem zusätzliche Montagearbeiten zum Anbringen und Befestigen der Ventilringe erfordern.

Aufgabe der Erfindung ist es, ein Ringventil dieser Art so weiterzubilden, daß insbesondere mit möglichst einfachen Mitteln eine zuverlässige Funktion des Ventiles sichergestellt wird, u.zw. bei einwandfreier Abdichtung und Federbelastung.

Dies wird mit der Erfindung durch die im Anspruch 1 enthaltenen Merkmale erreicht. Die wesentlichen Funktionen der Ventilplatte werden dabei einerseits auf die Stützplatte und andererseits auf die einzelnen Ventilringe aufgeteilt, ohne daß sich diese beiden Bestandteile bei der Ausführung ihrer Funktion gegenseitig behindern. Da die Stützplatte auf den Ventilringen lediglich aufliegt, ohne an ihnen befestigt zu sein, können sich die beiden Bestandteile der Ventilplatte zumindest in Hubrichtung unter dem Einfluß der Strömungskräfte des durch das Ventil gesteuerten Mediums auch voneinander abheben, wodurch erreicht wird, daß auch bei ungleicher Abnützung einzelner Teile ein dichter Abschluß des Ventils gewährleistet ist. Bei bestimmten Ausführungen des erfindungsgemäßen Ventils ist auch eine freie Verschiebbarkeit in radialer Richtung vorgesehen, was gleichfalls zu einer Verbesserung und zur Sicherstellung der Abdichtung beiträgt. Die Stützplatte, die steif ausgebildet sein kann, sorgt für eine gleichmäßige Aufbringung und Verteilung der Federkräfte auf die Ventilringe.

Die Ausbildung einzelner, voneinander getrennter, konzentrisch angeordneter Ventilringe ist bei Ringventilen an sich bereits bekannt. So ist aus der US-PS 3 536 094 ein Ringventil für Kompressoren bekannt, bei dem die Durchgangskanäle des Ventilsitzes durch einzelne Ventilringe gesteuert sind. Diese Ventilringe sind voneinander unabhängig angeordnet und je mit eigenen Schließfedern versehen. Auf ihrer dem Ventilsitz zugewendeten Seite sind die Ventilringe mit kreisbogenförmigem Profil ausgebildet und ragen in eine trichterförmige Erweiterung des zugehörigen Durchgangskanals hinein, wodurch eine Führung der Ventilringe in radialer Richtung erzielt wird. Für jeden einzelnen Ventilring ist eine eigene Befederung vorgesehen und jeder Ventilring ist in seinem gesamten Verlauf festigkeitsmäßig und in der Formgebung so ausgebildet, daß er die Federkräfte aufnehmen und übertragen kann. Es wird dort also keine Trennung der angesprochenen beiden wesentlichen Funktionen der Ventilplatte erzielt.

Die Stützplatte kann nach einer vorteilhaften Weiterbildung der Erfindung in axialer Richtung im Bereich der Ventilachse und/oder ihres äußeren Umfanges gegenüber dem Ventilsitz und dem Fänger fixiert sein und durch entsprechende Formgebung und/oder Materialwahl unmittelbar auch die Federelemente bilden. Dabei wird in vorteilhafter Weise wieder von der gemäß der vorliegenden Erfindung erfolgten Aufteilung der beiden wesentlichen Funktionen der Ventilplatte gebraucht gemacht. Die zur einstückigen Realisierung der Federelemente erforderlichen Maßnahmen an der Stützplatte beeinträchtigen in keiner Weise die von den Ventilringen wahrgenommene eigentliche Dichtfunktion.

In weiterer Ausgestaltung der Erfindung kann im zuletzt genannten Zusammenhang vorgesehen sein, daß die Ventilringe eine ebene Dichtfläche aufweisen und bei geschlossenem Ventil eben auf dem Ventilsitz aufliegen, und daß die ... Stützplatte mit Zentriervorsprüngen versehen ist, die wenigstens an einem Rand der Ringplatten anliegen. Die Letztgenannten können sich dabei in axialer Richtung gegenüber der Stützplatte bzw. den anderen Ringplatten ein gewisses Ausmaß bewegen und damit individuell den Strömungsverhältnissen anpassen. Ein Herausfallen der Ringplatten aus ihren Führungen kann nicht eintreten, da diese durch den Strömungsdruck immer gegen die Stützplatte und damit ihre Führungen gedrückt werden.

Die Stützplatte kann nach einer anderen vorteilhaften Weiterbildung der Erfindung wenigstens teilweise mit nutförmigen Vertiefungen versehen sein, in die die Ringplatten eingesetzt sind. Dies ergibt eine einfache Möglichkeit der Herstellung der Führungen bzw. Zentrierungen für die einzelnen Ringplatten gegenüber der Stützplatte.

In allen genannten Varianten der Führung bzw. Zentrierung der Ringplatten kann auch vorgesehen sein, daß die innenliegenden, kleineren Durchmesser aufweisenden Ringplatten dünner oder aber die zugehörigen Anlageflächen an der Stützplatte tiefer ausgeführt sind, womit sich die innenliegenden Ringe unter Druckeinwirkung früher heben können.

Nach einer weiteren vorteilhaften Ausgestaltung der Erfindung ist vorgesehen, daß die Ringplatten relativ zur Stützplatte verdrehgesichert sind, vorzugsweise durch radiale Vorsprünge oder dergleichen, welche im Eingriff mit radial ausgerichteten Führungsflächen an der Stützplatte sind. Die beschriebene Verdrehsicherung der Ringplatten, die für manche Anwendungsfälle vorteilhafter als eine freie Verdrehbarkeit der Ringplatten ist, ist einfach herzustellen und in der Kombination mit der radialen Führung bzw. Zentrierung der Ringplatten besonders vorteilhaft.

Nach einer weiteren Ausgestaltung der Erfindung liegt die Stützplatte wenigstens im Bereich der Ränder der Ringplatten auf diesen dichtend auf, wobei die Ringplatten im abgedichteten Bereich Durchbrechungen aufweisen. Damit ist sichergestellt, daß die Ringplatten im geschlossenen Zustand des Ventils nicht durch den Differenzdruck belastet werden, der über die Durchbrechungen nun auf die Stützplatte einwirkt. An sich sind damit aber zwei Ventilsitze an den beiden gegenüberliegenden Oberflächen der Ringplatten gegeben; die Gefahr einer verdoppelten Undichtheit wird dabei allerdings zufolge der Möglichkeit, den Werkstoff der Ringplatten entsprechend weich zu wählen, ausgeschlossen.

Im letztgenannten Zusammenhang ist eine weitere Ausgestaltung der Erfindung vorteilhaft, gemäß welcher die Stützplatte mit auf den Ringplatten aufliegenden Dichtleisten versehen ist. Diese können insbesondere bei weichen, gemäß einer weiteren Ausbildung der Erfindung zumindest teilweise aus Kunststoff bestehenden Ringplatten, die Abdichtung verbessern bzw. die Gefahr einer Undichtheit verringern.

Die Stützplatte kann erfindungsgemäß bei geschlossenem Ventil nur auf einem Teil der Ringplatten, z.B. auf der äußersten Ringplatte, aufliegen und zwischen den übrigen Ringplatten und der Stützplatte ein freier Zwischenspalt vorgesehen sein. Zu diesem Zweck können beispielsweise die Ringplatten bei gleichdicker Stützplatte ungleich dick ausgebildet sein, oder es können die an der Stützplatte für die einzelnen Ringplatten vorgesehenen Abstützflächen in unterschiedlichen Ebenen liegen, z.B. ungleich tief in die Stützplatte eingearbeitet sein. Mit dieser Ausbildung wird der zusätzliche Vorteil erzielt, daß die Ringplatten, auf denen die Stützplatte bei geschlossenem Ventil nicht unmittelbar aufliegt, bei der Umkehr der Strömungsrichtung im Kolbenverdichter leicht und schnell vom Ventilsitz abheben, weil sie praktisch ohne Federbelastung sind. Nach dem Öffnen des Ventils treffen aber auch diese Ringplatten auf der Stützplatte auf, so daß ihre Öffnungsbewegung gedämpft wird.

Eine weitere vorteilhafte Ausführungsform des Ringventils nach der Erfindung besteht darin, daß die der gemeinsamen Stützplatte zugeordneten Ringplatten sowohl auf ihren dem Ventilsitz zugewendeten als auch auf ihren dem Ventilsitz abgewendeten Seiten verjüngt ausgebildet sind und in an sich bekannter Weise in dazu passende trichterförmige Erweiterungen des Ventilsitzes eingreifen. Durch diese Ausbildung wird ein besonders einfaches Ringventil mit verbesserten funktionellen Eigenschaften erzielt. Durch die verjüngte Ausbildung der Ringplatten auch an ihrer Oberseite, die dem Ventilsitz abgewendet ist, wird die Auflagefläche zwischen den Ringplatten und der zugehörigen Stützplatte verringert, so daß keine nachteiligen Haftungskräfte zwischen den Ringplatten und der Stützplatte auftreten, die insbesondere bei geschmierten Ventilen oder bei der Förderung von Flüssigkeit mitführenden Gasen ein verspätetes Schließen des Ventils mit allen nachteiligen Folgen verursachen könnten. Weiterhin werden zusätzlich Angriffsflächen für das durch das Ventil geförderte Medium geschaffen, so daß nach Aufhören der Förderung sofort am Anfang einer sich bildenden Rückströmung zusätzliche Kräfte auf die Ringplatten ausgeübt werden, die ein sofortiges Schließen bewirken. Nachteilige Spätschlüsse des Ventils werden somit verhindert. Darüber hinaus wird durch die verjüngte Ausbildung der Ringplatten auf beiden Seiten eine Materialersparnis und eine Verringerung des Gewichtes der Ringplatten bewirkt, was beides gleichfalls von Vorteil ist.

Bei einer bevorzugten Ausbildung der Erfindung weisen die Ringplatten auf ihren beiden Seiten das gleiche Profil auf. Die Ringplatten können dabei auch seitenverkehrt in das Ventil eingebaut werden, so daß zunächst bei der Montage des Ventils nicht auf eine bestimmte Einbaulage geachtet werden muß, später dann, beim Auftreten von Abnützungserscheinungen, die Ringplatten gewendet werden können, wodurch sie entsprechend länger verwendbar sind.

In weiterer Ausgestaltung der Erfindung können die Ringplatten mit vieleckigem Querschnitt ausgebildet sein. Dabei wird ein regelmäßiges Querschnittsprofil bevorzugt, das verhältnismäßig einfach hergestellt werden kann. Zweckmäßig können die Kanten des vieleckigen Querschnittsprofils abgerundet sein, wodurch die Gefahr des Verkantens verringert und die Strömungsverhältnisse entlang der Ringplatten verbessert werden.

Eine besonders einfache Ausführungsform der Erfindung besteht schließlich darin, die Ringplatten torusförmig auszubilden. Diese Ringform mit kreisförmigem Querschnittsprofil erfordert nur einen geringen Herstellungsaufwand. Trotzdem bewirkt die gemeinsame Stützplatte eine gleichmäßige Übertragung der Federkräfte auf die Ringplatten und eine sichere Führung derselben während der Hubbewegung. Das Querschnittsprofil der Ringplatten kann aber auch unterschiedlich gekrümmt, z.B. ellipsenförmig oder erbsenförmig ausgebildet sein. Weiterhin kann ein Rechteckprofil, das auf seinen beiden Seiten bombiert oder abgerundet ist, vorgesehen werden.

Die erfindungsgemäßen Ringplatten können in vorteilhafter Weise aus einem nichtmetallischen Werkstoff, insbesondere aus Kunststoff hergestellt werden. Sie sind dazu aufgrund ihres Querschnittsprofils besonders geeignet.

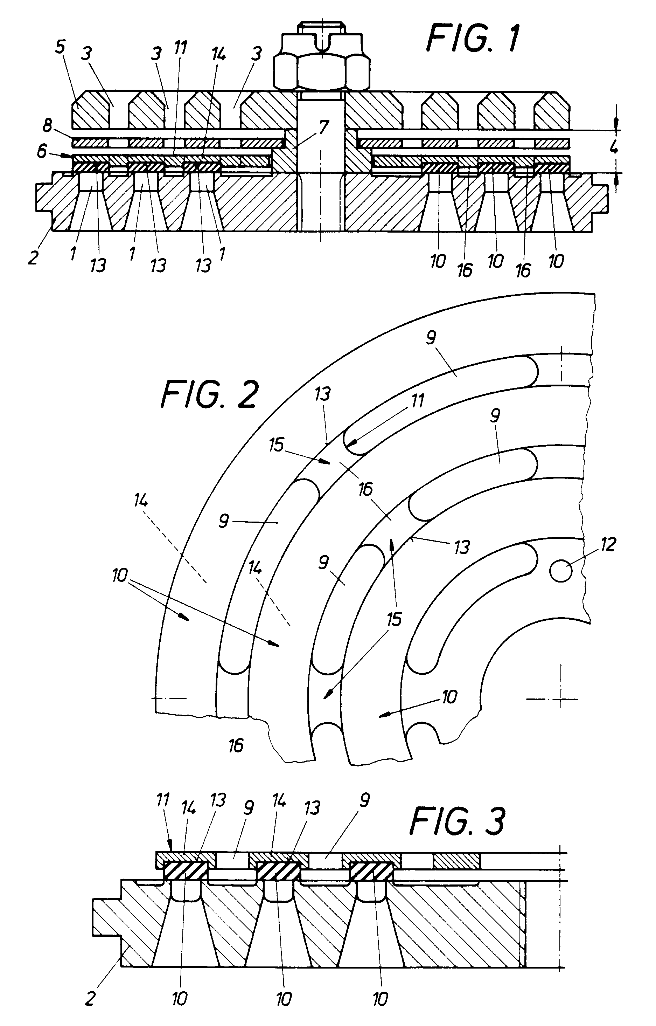

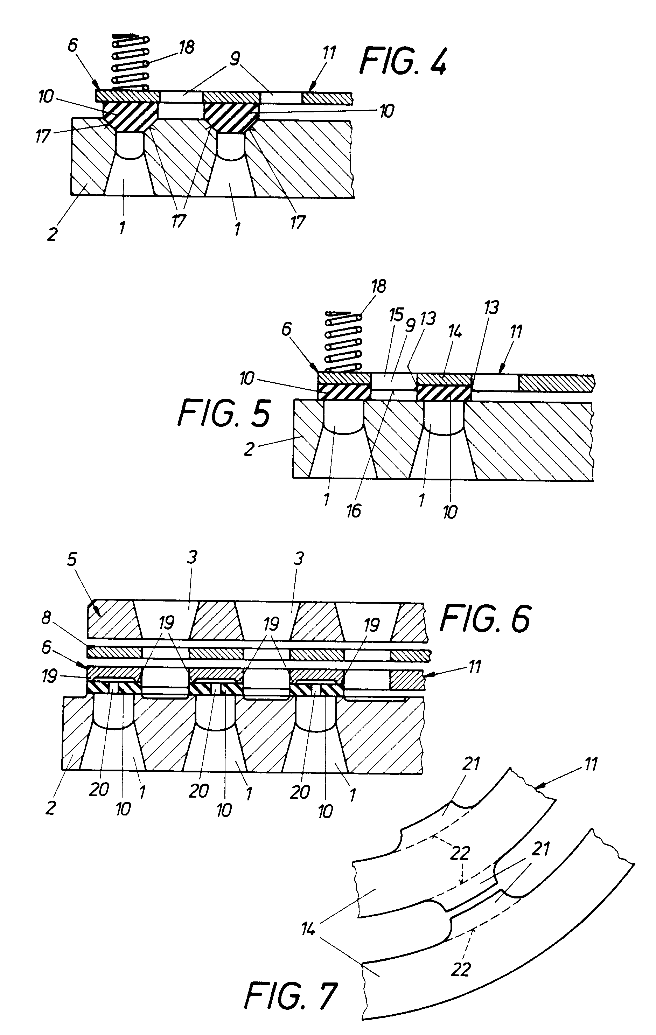

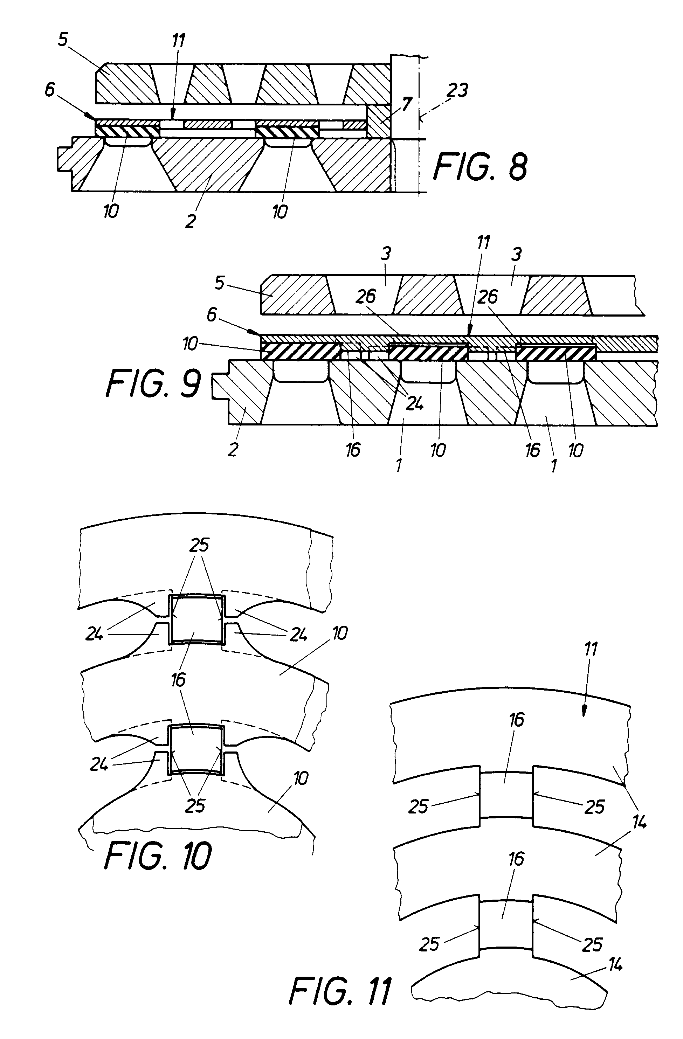

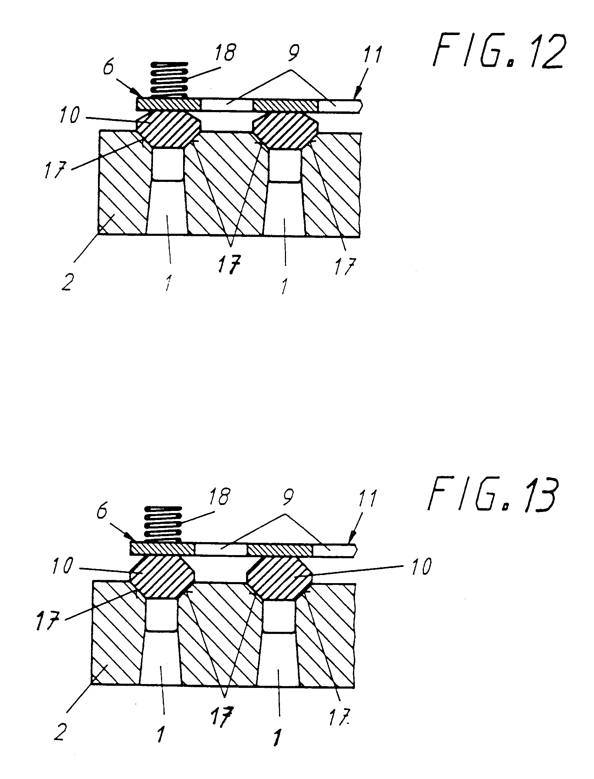

In den Zeichnungen sind mehrere Ausführungsbeispiele der Erfindung schematisch dargestellt. Fig. 1 zeigt einen teilweisen Querschnitt durch ein erfindungsgemäß ausgebildetes Ringventil, Fig. 2 die Ventilplatte des Ausführungsbeispiels nach Fig. 1 in einer teilweisen Ansicht von unten, Fig. 3 einen teilweisen Querschnitt durch ein anderes Ausführungsbeispiel der Erfindung, wobei hier nur der Ventilsitz und die Ventilplatte dargestellt sind; die Fig. 4 und 5 zeigen weitere Ausführungsbeispiele der Erfindung in einer der Fig. 3 entsprechenden Darstellung; Fig. 6 zeigt ein weiteres Ausführungsbeispiel der Erfindung in einem der Fig. 1 entsprechenden Querschnitt, Fig. 7 eine teilweise Draufsicht auf eine Stützplatte eines anderen Ausführungsbeispiels der Erfindung, Fig. 8 einen teilweisen Querschnitt durch ein weiteres Ausführungsbeispiel der Erfindung, Fig. 9 ein in der Querschnittsdarstellung im wesentlichen wiederum der Fig. 1 entsprechendes anderes Ausführungsbeispiel, Fig. 10 eine Ansicht auf die Ventilplatte gemäß Fig. 9 von unten, und Fig. 11 eine Ansicht auf die Stützplatte gemäß Fig. 9, ebenfalls von unten. Die Fig. 12 bis 15 zeigen schließlich je einen teilweisen Querschnitt durch verschiedene Ausführungsbeispiele der Erfindung.

Das Ringventil nach Fig. 1 weist einen ringförmig angeordnete Durchgangskanäle 1 für das gesteuerte Medium aufweisenden Ventilsitz 2, einen Abströmkanäle 3 aufweisenden, über dem Ventilsitz 2 unter Freilassung eines Zwischenraumes 4 angebrachten Fänger 5 und eine in diesem Zwischenraum 4 angeordnete Ventilplatte 6, welche hier durch eine über einen Zentrieransatz 7 am Fänger 5 abgestützte Dämpferplatte 8 bedämpft und in nicht dargestellter Weise federbelastet ist, auf. In der gezeichneten Darstellung ist das Ringventil geschlossen - sobald auf der Seite der Durchgangskanäle 1 ein zur Überwindung der über Federelemente auf die Ventilplatte 6 ausgeübten Vorspannkraft ausreichender Druck wirkt, hebt die Ventilplatte 6 vom Ventilsitz 2 ab, womit über die Öffnungen 9 in der Ventilplatte 6 eine Durchströmung des zu steuernden Mediums von den Durchgangskanälen 1 zu den Abströmkanälen 3 erfolgen kann.

Die Ventilplatte 6 weist einzelne, über den Durchgangskanälen 1 des Ventilsitzes 2 angeordnete Ventilringe (Ringplatten) 10 sowie eine gemeinsam auf allen Ringplatten 10 an der dem Ventilsitz 2 gegenüberliegenden Seite aufliegende und die Kraft der auf sie wirkenden Federelemente übertragende Stützplatte 11 auf. Die Stützplatte 11 ist dabei am Zentrieransatz 7 zwischen Ventilsitz 2 und Fänger 5 zentriert - zur Verdrehsicherung dient eine in Fig. 2 ersichtliche Bohrung 12, die auf hier nicht dargestellte Weise mit einem Stift am Ventilsitz 2 zusammenwirkt.

Die Stützplatte 11 kann mit den einzelnen Ringplatten 10 in radialer Richtung unverschiebbar verankert sein. Die beispielsweise aus einem geeigneten Kunststoff bzw. aus weicherem, die Abdichtung am Ventilsitz 2 verbesserndem Material bestehenden Ringplatten 10 können aber auch, wie in Fig. 1 und 2 ersichtlich, in umlaufende Nuten 13 an der beispielsweise aus geeignetem harten Material, wie etwa Federstahl oder dergleichen, bestehenden Stützplatte 11 mit geringem Spiel lose eingelegt sein. Da im Ausführungsbeispiel nach den Fig. 1 und 2 die Breite der einzelnen Ringplatten 10 genau der Breite der darüberliegenden, zwischen den Öffnungen 9 verbleibenden Stege 14 der Stützplatte 11 entspricht, sind die Nuten 13 eigentlich nur im Bereich der zwischen den Öffnungen 9 verbleibenden Verbindungsstege 15 vorhanden, womit Zentriervorsprünge 16 geschaffen sind, die an den Rändern der Ringplatten 10 anliegen.

Auch wenn - wie erwähnt - die Ringplatten 10 mit geringem Spiel lose in der Stützplatte 11 gehalten werden, kann es nicht zu einem Herausfallen derselben kommen, da der Druck des von den Durchgangskanälen 1 zu den Abströmkanälen 3 strömenden Mediums der Ringplatten 10 stets gegen die Stützplatte 11 drückt.

Beim Ausführungsbeispiel nach Fig. 3 weisen die Ringplatten 10 eine geringere Breite als die darüberliegenden Stege 14 der Stützplatte 11 auf, so daß die auch hier wiederum zur Aufnahme der Ringplatten 10 vorgesehenen Nuten 13 auch im Bereich der Öffnungen 9 ausgebildet sind, womit sich eine verbesserte Halterung bzw. Führung der Ringplatten 10 in der Stützplatte 11 ergibt.

Beim Ausführungsbeispiel nach Fig. 4 sind die einzelnen Ringplatten 10 von der Stützplatte 11 her überhaupt ungeführt und liegen lediglich in kegelförmig ausgebildeten Dichtsitzen 17 des Ventilsitzes 2. Als Federlemente zur Vorspannung der Ventilplatte 6 dienen hier einzelne Schraubenfedern 18, deren Federkraft wiederum über die Stützplatte 11 gleichmäßig auf die Ringplatten 10 und damit die Dichtsitze 17 verteilt wird. Da hier jegliche Führung der Ringplatten 10 an der Stützplatte 11 fehlt muß natürlich vorgesehen sein, daß der mögliche Hub der Ringplatten 10 gegenüber den Dichtsitzen 17 nicht zu einem gänzlichen Herausbewegen der Erstgenannten aus den Dichtsitzen führen kann.

Die in Fig. 5 dargestellte Anordnung entspricht im wesentlichen wiederum der Ausführung nach Fig. 1 - etwas abweichend davon sind hier die Nuten 13 in der Stützplatte 11 breiter ausgeführt als die Stege 14 sind, so daß sich wiederum nur Zentriervorsprünge 16 im Bereich der Verbindungsstege 15 zwischen den Öffnungen 9 der Stützplatte 11 ergeben, die hier eine geringere Breite als die Öffnungen 9 aufweisen. Als weitere Abweichung zu Fig. 1 sind in Fig. 5 ebenso wie in Fig. 4 die Federelemente als einzelne Schraubenfedern 18 dargestellt.

Bei der Ausführung nach Fig. 6 liegt die Stützplatte 11 mit Dichtleisten 19 im Bereich der Ränder der Ringplatten 10 auf diesen dichtend auf, wobei die Ringplatten 10 im abgedichteten Bereich zwischen den Dichtleisten 19 Durchbrechungen 20 aufweisen. Damit sind die Ringplatten 10 druckentlastet und können ohne weiteres auch bei größeren zu steuernden Drücken aus weichem, elastischen Material, wie etwa Kunststoff, bestehen.

Fig. 7 zeigt eine weitere Möglichkeit zur Führung, Zentrierung oder Halterung der hier nicht dargestellten Ringplatten an der Stützplatte 11. Zu diesem Zweck sind Laschen 21 in geeigneten Winkelabständen an den Stegen 14 vorgesehen, die bei der Herstellung der Stützplatte 11 aus der Ebene der Zeichnung entlang der strichlierten Linien 22 herausgebogen werden, womit sich eine seitliche Führung für die Ringplatten ergibt, die entgegen der Darstellung aber auch nur an jeweils einer Seite erfolgen könnte.

Beim Ausführungsbeispiel nach Fig. 8 ist die Stützplatte 11 auf nicht weiter dargestellte Weise in axialer Richtung im Bereich der Ventilachse 23 bzw. am Zentrieransatz 7 gegenüber dem Ventilsitz 2 bzw. dem Fänger 5 fixiert und bildet durch entsprechende Formgebung und/oder Materialwahl unmittelbar auch die Federelemente für die erforderliche Vorspannung der Ringplatten 10 gegenüber dem Ventilsitz 2.

Bei der Ausführung nach den Fig. 9 bis 11 sind die Ringplatten 10 relativ zur Stützplatte 11 verdrehgesichert, wozu an den Ringplatten 10 radiale Vorsprünge 24 vorgesehen sind, welche im Eingriff mit ebenfalls radial ausgerichteten Führungsflächen 25 an der Stützplatte 11 sind. Diese Führungsflächen 25 sind hier einfach unmittelbar seitlich an den Zentriervorsprüngen 16 der Stützplatte 11 ausgebildet, welche sich beispielsweise ähnlich wie zu Fig. 5 beschrieben ergeben.

Fig. 9 zeigt eine weitere Variante der Erfindung, die unabhängig von der Verdrehsicherung ist und auch ohne diese verwirklicht werden kann. Die beiden innenliegenden Ringplatten 10 sind dort weniger dick ausgebildet als die links dargestellte, außenliegende Ringplatte 10, so daß bei geschlossenem Ventil, wie in Fig. 9 dargestellt, zwischen den inneren Ringplatten 10 und der Stützplatte 11 ein schmaler Zwischenspalt 26 verbleibt. Die beiden inneren Ringplatten 10 sind dabei durch die Stützplatte 11 nicht belastet und heben beim Öffnen des Ventils früher vom Ventilsitz 2 ab als die äußere Ringplatte 10. Der gleiche Effekt kann erreicht werden, wenn bei gleichdicken Ringplatten 10 die Abstützflächen derselben an der Stützplatte 11 ungleich weit von der Dichtfläche des Ventilsitzes 2 vorgesehen sind.

Auch in den Ausführungsbeispielen nach den Fig. 12 bis 15 sind ringförmig verlaufende Durchgangskanäle 1 im Ventilsitz 2 konzentrisch zueinander angeordnet. Die Ventilachse, die rechte Ventilhälfte und der Fänger sind nicht dargestellt. Die Durchgangskanäle 1 werden durch die Ventilplatte 6 gesteuert, die aus den einzelnen Ringplatten 10 und der diesen zugeordneten gemeinsamen Stützplatte 11 gebildet ist. Die Durchgangskanäle 11 sind an ihrer der Ventilplatte 6 zugewendeten Seite mit trichterförmigen Erweiterungen versehen, die Dichtsitze 17 bilden, die mit den Ringplatten 10 zusammenwirken. Die Ringplatten 10 sind an ihrer Unterseite verjüngt ausgebildet und ragen in die trichterförmigen Erweiterungen hinein, wo sie mit ihren Flanken mit den Dichtsitzen 17 zusammenwirken.

Der beim Arbeiten des Ventils auftretende Hub der Ringplatten 10 ist kleiner als die Höhe der verjüngten Teile der Ringplatten 10, mit welchen diese in die trichterförmigen Erweiterungen hineinragen. Die Ringplatten 10 sind dadurch während der Hubbewegung in radialer Richtung geführt; sie können die trichterförmigen Erweiterungen nicht verlassen. Die Stützplatte 11 bewirkt eine gleichmäßige Verteilung der durch die Schraubenfedern 18 aufgebrachten Federkräfte auf die einzelnen Ringplatten 10, u. zw. auch dann, wenn die Stützplatte 11 nur durch wenige Schraubenfedern 18 belastet ist, die nur auf den äußersten Ring der Stützplatte 11 wirken, wie in den Ausführungsbeispielen gezeigt ist. An Stelle der Schraubenfedern 18 können auch Federplatten vorgesehen sein oder es kann die Befederung durch aus der Stützplatte 11 herausgebogene federnde Arme erfolgen.

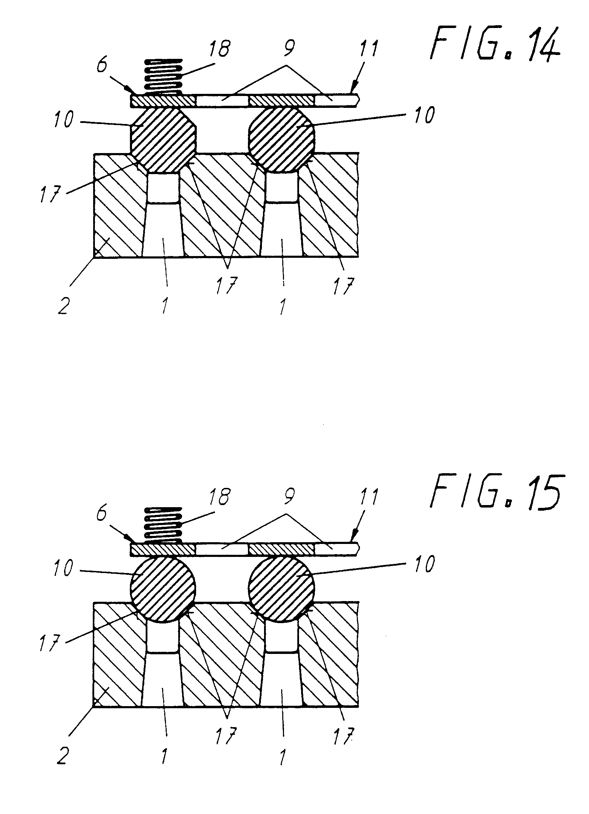

In den Fig. 12 bis 15 sind die der gemeinsamen Stützplatte 11 zugeordneten Ringplatten 10 jeweils sowohl auf ihrer dem Ventilsitz 2 zugewendeten Seite als auch auf der dem Ventilsitz 2 abgewendeten Seite verjüngt ausgebildet. Im Ausführungsbeispiel nach Fig. 12 sind die Ringplatten 10 auf ihrer auf der Stützplatte 11 aufliegenden Seite weniger steil abgeschrägt als auf der Seite des Ventilsitzes 2, wo ihre Flanken mit den Dichtsitzen 17 zusammenwirken. Gemäß Fig. 13 sind die Ringplatten 10 dagegen auf ihren beiden Seiten mit gleichem Profil ausgebildet. Dies bringt den zusätzlichen Vorteil, daß die Ringplatten 10 auch in umgekehrter Lage in das Ventil eingebaut werden können, weil beide Seiten zu den Dichtsitzen 17 im Ventilsitz 2 passen. Das Querschnittsprofil der Ringplatten 10 ist in Fig. 13 an der Oberseite und an der Unterseite konisch verjüngt ausgebildet. Es kann aber auch eine andere Formgebung aufweisen, insbesondere polygonal, kreisbogenförmig, elliptisch oder auf andere Weise bombiert, allenfalls mit zylindrischen Flanken verlaufen. In Fig. 14 sind Ringplatten 10 mit achteckigem Querschnitt dargestellt, wobei das Profil der rechts gezeigten Ringplatte 10 abgerundete Kanten aufweist. Die Ringplatten 10 im Ausführungsbeispiel nach Fig. 15 sind torusförmig ausgebildet, also mit kreisringförmigem Profilquerschnitt.

Durch die gezeigte und beschriebene Formgebung der Ringplatten 10 wird einerseits eine sichere Führung und einwandfreie Abdichtung der Dichtsitze 17 im Ventilsitz 2 erreicht und anderseits die Auflagefläche auf der Stützplatte 11 verringert. Durch die Öffnungen 9 in der Stützplatte 11 zu den Durchgangskanälen 1 zurückströmendes Medium kann so die verjüngten Flächen an der Oberseite der Ringplatte 10 beaufschlagen und ein rasches Schließen des Ventils bewirken. Wenn die Ringplatten an ihren Ober- und Unterseiten gleich ausgebildet sind, wie in den Fig. 13 bis 15 gezeigt ist, können sie bei Abnützungserscheinungen umgedreht werden, wodurch ihre Lebensdauer verlängert wird. Die einfach profilierten Ringplatten können mit geringem Aufwand hergestellt werden. Ebenso ist die Stützplatte einfach zu fertigen, weil keinerlei Verankerungen und Führungsmittel für die Ringplatten 10 erforderlich sind.

## Patentansprüche

1. Ringventil, insbesondere für Verdichter, mit einem Ventilsitz (2), der ringförmig angeordnete Durchgangskanäle (1) für das gesteuerte Medium aufweist, einem Fänger (5), der Abströmkanäle (3) aufweist und über dem Ventilsitz (2) unter Freilassung eines Zwischenraumes (4) angebracht ist, und mit einer in diesem Zwischenraum (4) angeordneten Ventilplatte (6), die durch am Fänger (5) abgestützte Federelemente gegen den Ventilsitz (2) belastet ist, wobei die Ventilplatte (6) aus einzelnen, über den Druchgangskanälen (1) des Ventilsitzes (2) angeordneten Ventilringen (Ringplatten) (10) und einer gemeinsam auf allen Ventilringen (10) an der dem Ventilsitz (1) gegenüberliegenden Seite aufliegenden und die Kraft der auf sie wirkenden Federelemente (18) übertragenden Stützplatte (11) besteht, **dadurch gekennzeichnet,** daß die Stützplatte (11) im Ventil zentriert und bei ihrer Hubbewegung geführt ist, und daß die Ventilringe (10) zwischen den Ventilsitz (2) und die Stützplatte (11), ohne mit dieser in Hubrichtung verankert zu sien, lose eingelegt sind.

2. Ringventil nach Anspruch 1, dadurch gekennzeichnet, daß die Stützplatte (11) in axialer Richtung im Bereich der Ventilachse (23) und/oder ihres äußeren Umfanges gegenüber dem Ventilsitz (2) und dem Fänger (5) fixiert ist und durch entsprechende Formgebung und/oder Materialwahl unmittelbar auch die Federelemente bildet.

3. Ringventil nach Anspruch 1 oder 2, dadurch gekennzeichnet, daß die Ventilringe (10) eine ebene Dichtfläche aufweisen und bei geschlossenem Ventil eben auf dem Ventilsitz (2) aufliegen, und daß die Stützplatte (11) mit Zentriervorsprüngen versehen ist, die wenigstens an einem Rand der Ventilringe (10) anliegen.

4. Ringventil nach Anspruch 1, 2, oder 3, dadurch gekennzeichnet, daß die Stützplatte (11) wenigstens teilweise mit nutförmigen Vertiefungen (13) versehen ist, in die die Ventilringe (10) eingesetzt sind.

5. Ringventil nach einem der Ansprüche 1 bis 4, dadurch gekennzeichnet, daß die Ventilringe (10) durch radiale Vorsprünge (24) od. dgl., welche im Eingriff mit radial ausgerichteten Führungsflächen (25) an der Stützplatte (11) sind, relativ zur Stützplatte (11) verdrehgesichert sind.

6. Ringventil nach einem der Ansprüche 1 bis 5, dadurch gekennzeichnet, daß die Stützplatte (11) wenigstens im Bereich der Ränder der Ventilringe (10) auf diesen dichtend aufliegt, und daß die Ventilringe (10) im abgedichteten Bereich Durchbrechungen (20) aufweisen.

7. Ringventil nach Anspruch 6, dadurch gekennzeichnet, daß die Stützplatte (11) mit auf den Ventilringen (10) aufliegenden Dichtleisten (19) versehen ist.

8. Ringventil nach einem der Ansprüche 1 bis 7, dadurch gekennzeichnet, daß die Ventilringe (10) wenigstens teilweise aus Kunststoff bestehen.

9. Ringventil nach einem der Ansprüche 1 bis 8, dadurch gekennzeichnet, daß die Stützplatte (11) bei geschlossenem Ventil nur auf einem Teil der Ventilringe (19), z.B. auf dem äußersten Ventilring (10), aufliegt und zwischen den übrigen Ventilringen (10) und der Stützplatte (11) ein freier Zwischenspalt (26) vorgesehen ist.

10. Ringventil nach einem der Ansprüche 1 bis 9, dadurch gekennzeichnet, daß die der gemeinsamen Stützplatte (11) zugeordneten Ventilringe (10) sowohl auf ihren dem Ventilsitz (2) zugewendeten als auch auf ihren dem Ventilsitz (2) abgewendeten Seiten verjüngt ausgebildet sind und in dazu passende trichterförmige Erweiterungen des Ventilsitzes (2) eingreifen.

11. Ringventil nach Anspruch 10, dadurch gekennzeichnet, daß die Ventilringe (10) auf ihren beiden Seiten das gleiche Profil aufweisen.

12. Ringventil nach Anspruch 10 oder Anspruch 11, dadurch gekennzeichnet, daß die Ventilringe (10) mit vieleckigem Querschnitt ausgebildet sind.

13. Ringventil nach Anspruch 12, dadurch gekennzeichnet, daß die Kanten des vieleckigen Querschnitts abgerundet sind.

14. Ringventil nach Anspruch 10 oder nach Anspruch 11, dadurch gekennzeichnet, daß die Ventilringe (10) torusförmig ausgebildet sind.

## Claims

1. A ring valve, in particular for compressors, with a valve seat (2) which has annularly arranged through channels (1) for the controlled medium, with a collector (5) which has drainage channels (3) and is mounted above the valve seat (2) leaving a space (4) free, and with a valve plate (6) which is arranged in this space (4) and which is loaded against the valve seat (2) by spring elements supported on the collector (5), the valve plate (6) consisting of individual valve rings (ring plates) (10), arranged above the through channels (1) of the valve seat (2), and a supporting plate (11), resting jointly on all the valve rings (10) on the side opposite the valve seat (1) and transmitting the force of the spring elements (18) acting thereon, **characterised in that** the supporting plate (11) is centred in the valve and is guided during its lifting movement, and **in that** the valve rings (10) are fitted loosely between the valve seat (2) and the supporting plate (11), without being anchored to the latter in the lifting direction.

2. A ring valve according to Claim 1, **characterised in that** the supporting plate (11) is fixed relative to the valve seat (2) and the collector (5) in the axial direction in the region of the valve axis (23) and/or its outer periphery and also directly forms the spring elements through its appropriate design and/or the choice of material.

3. A ring valve according to Claim 1 or 2, **characterised in that** the valve rings (10) have an even sealing surface and rest evenly on the valve seat (2) when the valve is closed, and **in that** the supporting plate (11) is provided with centering projections which rest against at least one edge of the valve rings (10).

4. A ring valve according to Claim 1, 2, or 3, **characterised in that** at least part of the supporting plate (11) is provided with groove-shaped recesses (13), into which the valve rings (10) are inserted.

5. A ring valve according to any one of Claims 1 to 4, **characterised in that** the valve rings (10) are prevented from twisting relative to the supporting plate (11) by radial projections (24) or the like, which engage with radially aligned guiding surfaces (25) on the supporting plate (11).

6. A ring valve according to any one of Claims 1 to 5, **characterised in that** the supporting plate (11) rests on the valve rings (10) in a sealing manner, at least in the region of their edges, and **in that** the valve rings (10) have openings (20) in the sealed region.

7. A ring valve according to Claim 6, **characterised in that** the supporting plate (11) is provided with sealing strips (19) which rest on the valve rings (10).

8. A ring valve according to any one of Claims 1 to 7, **characterised in that** the valve rings (10) consist at least partially of synthetic material.

9. A ring valve according to any one of Claims 1 to 8, **characterised in that** the supporting plate (11) only rests on some ofthe valve rings (19), e.g. on the outermost valve ring (10), when the valve is closed, and a free intermediate gap (26) is provided between the other valve rings (10) and the supporting plate (11).

10. A ring valve according to any one of Claims 1 to 9, **characterised in that** the valve rings (10) associated with the joint supporting plate (11) are tapered both on their sides facing the valve seat (2) and on their sides facing away from the valve seat (2) and engage in matching funnel-shaped extensions of the valve seat (2).

11. A ring valve according to Claim 10, **characterised in that** the valve rings (10) have the same profile on both their sides.

12. A ring valve according to Claim 10 or Claim 11, **characterised in that** the valve rings (10) are formed with a polygonal cross-section.

13. A ring valve according to Claim 12, **characterised in that** the edges of the polygonal cross-section are rounded.

14. A ring valve according to Claim 10 or according to Claim 11, **characterised in that** the valve rings (10) are torus-shaped.

## Revendications

1. Soupape annulaire, en particulier pour compresseur, comportant un siège de soupape (2) qui présente des canaux de passage (1), disposés en anneaux, pour le milieu commandé, un butoir (5) qui présente des canaux d'échappement (3) et qui est disposé au-dessus du siège de soupape (2) en laissant un interstice (4), et une plaque de soupape (6), disposée dans cet interstice (4), qui est sollicitée contre le siège de soupape (2) par des éléments de ressorts soutenus sur le butoir (5), la plaque de soupape (6) consistant en anneaux de soupape (plaques annulaires) (10) individuels, disposés au-dessus des canaux de passage (1) du siège de soupape (2), et en une plaque-support (11) qui repose sur tous les anneaux de soupape (10) du côté opposé au siège de soupape (1) et qui transmet la force des éléments de ressorts (18) qui agissent sur elle, caractérisée en ce que la plaque-support (11) est centrée dans la soupape et est guidée lors de son mouvement de levée, et en ce que les anneaux de soupape (10) sont insérés de manière lâche entre le siège de soupape (2) et la plaque-support (11) sans être ancrés à celle-ci dans la direction de la levée.

2. Soupape annulaire selon la revendication 1, caractérisée en ce que la plaque-support (11) est fixée par rapport au siège de soupape (2) et au butoir (5) en direction axiale dans le domaine de l'axe de la soupape (23) et/ou de sa périphérie externe et forme également directement les éléments de ressorts par une conception et/ou un choix de matériau correspondant.

3. Soupape annulaire selon la revendication 1 ou 2, caractérisée en ce que les anneaux de soupape (10) présentent une surface d'étanchéité plane et, lorsque la soupape est fermée, reposent à plat sur le siège de soupape (2), et en ce que la plaque-support (11) est munie de protubérances de centrage qui portent au moins sur un bord des anneaux de soupape (10).

4. Soupape annulaire selon la revendication 1, 2 ou 3, caractérisée en ce que la plaque-support (11) est munie au moins en partie d'évidements (13) en forme de rainures dans lesquels sont insérés les anneaux de soupape (10).

5. Soupape annulaire selon l'une des revendications 1 à 4, caractérisée en ce que les anneaux de soupape (10) sont empêchés de tourner par rapport à la plaque-support (11) par des protubérances radiales (24) ou analogues qui coopèrent avec des surfaces de guidage (25) agencées radialement sur la plaque-support (11).

6. Soupape annulaire selon l'une des revendications 1 à 5, caractérisée en ce que la plaque-support (11) repose de manière étanche sur les anneaux de soupape (10) au moins dans le domaine de leurs bords, et en ce que les anneaux de soupape (10) présentent des perforations (20) dans le domaine étanchéifié.

7. Soupape annulaire selon la revendication 6, caractérisée en ce que la plaque-support (11) est munie de nervures d'étanchéité (19) qui reposent sur les anneaux de soupape (10).

8. Soupape annulaire selon l'une des revendications 1 à 7, caractérisée en ce que les anneaux de soupape (10) consistent au moins en partie en matière plastique.

9. Soupape annulaire selon l'une des revendications 1 à 8, caractérisée en ce que, lorsque la soupape est fermée, la plaque-support (11) ne repose que sur une partie des anneaux de soupape (10), par exemple sur les anneaux de soupape (10) les plus externes, et en ce qu'il est prévu une fente intermédiaire (26) libre entre les autres anneaux de soupape (10) et la plaque-support (11).

10. Soupape annulaire selon l'une des revendications 1 à 9, caractérisée en ce que les anneaux de soupape (10) associés à la plaque-support (11) commune sont coniques aussi bien du côté tourné vers le siège de soupape (2) que du côté opposé au siège de soupape (2) et pénètrent dans des élargissements en forme d'entonnoir adaptés du siège de soupape (2).

11. Soupape annulaire selon la revendication 10, caractérisée en ce que les anneaux de soupape (10) présentent le même profil des deux côtés.

12. Soupape annulaire selon la revendication 10 ou la revendication 11, caractérisée en ce que les anneaux de soupape (10) ont une section droite polygonale.

13. Soupape annulaire selon la revendication 12, caractérisée en ce que les arêtes de la section droite polygonale sont arrondies.

14. Soupape annulaire selon la revendication 10 ou la revendication 11, caractérisée en ce que les anneaux de soupape (10) sont en forme de tores.
